(19) **Europäisches Patentamt / European Patent Office / Office européen des brevets**

(11) **EP 1 698 106 B1**

(12) **EUROPEAN PATENT SPECIFICATION**

(45) Date of publication and mention
of the grant of the patent:
**19.09.2012 Bulletin 2012/38**

(21) Application number: **03781254.2**

(22) Date of filing: **19.12.2003**

(51) Int Cl.:
***H04L 12/28*** (2006.01)

(86) International application number:
**PCT/SE2003/002040**

(87) International publication number:
**WO 2005/060170 (30.06.2005 Gazette 2005/26)**

(54) **FAST/OPPORTUNISTIC DISTRIBUTED RESOURCE REALLOCATION FOR ESTABLISHED CONNECTIONS IN A MULTIHOP NETWORK**

SCHNELLE OPPORTUNISTISCHE VERTEILTE BETRIEBSMITTELNEUZUTEILUNG FÜR HERGESTELLTE VERBINDUNGEN IN EINEM MEHRSPRUNG-NETZWERK

REATTRIBUTION DES RESSOURCES DISTRIBUEE RAPIDE/OPPORTUNISTE DESTINEE A DES CONNEXIONS ETABLIES DANS UN RESEAU A SAUTS MULTIPLES

(84) Designated Contracting States:
**AT BE BG CH CY CZ DE DK EE ES FI FR GB GR HU IE IT LI LU MC NL PT RO SE SI SK TR**

(43) Date of publication of application:
**06.09.2006 Bulletin 2006/36**

(73) Proprietor: **Telefonaktiebolaget LM Ericsson (publ)**
**164 83 Stockholm (SE)**

(72) Inventors:
• **LARSSON, Peter**
**S-169 71 SOLNA (SE)**
• **JOHANSSON, Niklas**
**S-191 34 SOLLENTUNA (SE)**

(74) Representative: **Kühn, Friedrich Heinrich et al**
**Ericsson AB**
**Patent Unit Radio Networks**
**Torshamnsgatan 23**
**164 80 Stockholm (SE)**

(56) References cited:
**US-A- 5 949 760      US-A- 5 987 011**
**US-B1- 6 535 498**

• **DONGKYUN KIM, ET AL.: 'Power-aware Route Maintenance Protocol for Mobile Ad Hoc Networks' IEEE TELECOMMUNICATIONS vol. 1, 23 February 2003 - 01 March 2003, pages 501 - 506, XP010637855**
• **ROUX N., ET AL.: 'Cost adaptive mechanism to provide network diversity for manet reactive routing protocols' IEEE MILCOM 2000 vol. 1, 22 October 2000 - 25 October 2000, pages 287 - 291, XP010532601**

**EP 1 698 106 B1**

## Description

## BACKGROUND OF THE INVENTION

### Field of the Invention

The present invention relates in general to a multihop network that implements a reactive routing protocol which is used by nodes to continuously adapt resources of the multihop network in response to topology changes in the multihop network s<o as to optimize the performance of a connection between a source node and a destination node.

### Description of Related Art

A problem inherent with multihop networks (wireless ad hoc networks) is that they have a topology that changes over time because the nodes are mobile which can lead to a connection breaking between two nodes relaying traffic for a specific connection. There are several other reasons why a topology changes over time in addition to moving nodes. For example, topology changes may occur even without nodes moving such as variations caused by moving objects on which radio waves reflect or changes in the communication media. These topology changes include, for example, channel variations (of own and/or interfering channels), traffic pattern changes, transmit pattern changes and resource allocation changes. To adapt to these topology changes, the multihop networks can employ either a proactive routing protocol or a reactive routing protocol. In multihop networks that employ a proactive routing protocol, the topology changes are typically adapted to by continuously updating the routing paths between the nodes. And, in multihop networks that employ a reactive routing protocol, the routing paths between the nodes are first set up in what is usually denoted the route discovery phase. Once the path setup is complete, the route maintenance phase takes over. This phase is responsible for maintaining paths between active source/destination pairs in the face of topological changes, for example when two nodes on the path towards the destination node have moved apart too far which causes the connection to break then a route repair procedure (part of the route maintenance phase) is invoked as a rescue operation to try and repair the connections between the nodes. If this rescue operation is not successful, then a new route discovery round has to be performed. Examples of reactive routing protocols include AODV (Ad Hoc on Demand Distance Vector) and DSR (Dynamic Source Routing) that were developed within IETFs MANET workgroup are described in the following articles:

- C. Perkins, E.M. Royer and S. R. Das, "Ad Hoc On-demand Distance Vector Routing", RFC 3561, July 2003.
- D. Johnson and D. Maltz, "Dynamic Source Routing in Ad Hoc Wireless Networks", draft-ietf-manet-dsr-09.txt, April 2003.

Dongkyun K. et al. "Power-aware Route Maintenance Protocol for Mobile Ad Hoc Networks" IEEE Telecommunications, 23 Feb.-1 March 2003 describes a mobile ad hoc network (MANET) that implements a CMMBCR (Conditional Max-Min Battery Capacity Routing) protocol which takes into account both the total transmission energy consumed by routes per packet and the remaining power of nodes. Source nodes S1 and S2 after receiving a SV-packet or FV-packet from an intermediate node P operates to find another route to the destination nodes D1 and D2.

Roux N. et al. "Cost Adaptive Mechanism to Provide Network Diversity for MANET Reactive Routing Protocols" IEEE MILCOM 2000, 22-25 October 2000 describes a cost adaptive mechanism (CAM) that can be used with any mobile ad hoc network (MANET) reactive routing protocol.. The CAM enhances the MANET because it modifies a route discovery phase to gather various link cost metrics and it introduces a route selection time window wherein the destination node and source node can choose a path among various routes according to the needs of the current network. For example, the destination node and source node can choose a route which minimizes network congestion.

Although these routing protocols generally work well they still have a drawback in which they fail to do enough to optimize the performance of a connection between two nodes. Accordingly, there is a need for a multihop network that implements a new reactive routing protocol which optimizes the performance of a connection between two nodes. This need and other needs are satisfied by the multihop network, node and method of the present invention.

## BRIEF DESCRIPTION OF THE INVENTION

The present invention includes a multihop network that implements a reactive routing protocol which enables nodes to continuously adapt network resources in a distributed/opportunistic manner in response to a topology change within the multihop network so as to optimize the performance of a connection between a source node and a destination node. The multihop network comprises the source node, at least one neighboring node, at least one active node, and the destination node. The neighboring node is within reach of the source node, the at least one active node and the destination node. The source node, the neighboring node, the active node and the destination node are distributed in a topology in the multihop network. The active node is capable of receiving and transmitting a beacon containing a measure of performance for a connection between the source node and the destination node. Said nodes implements a reactive routing protocol where a network resource of the multihop network is adapted in a distributed manner by the neighboring node or active node in response to a change of the topology in the multihop network to optimize the performance of the connection between said source node and said destination node, which distributed manner provides one resource adaptation at a time. The types of resources that can be adapted include for example: (1) a route; (2) a channel; and/or (3) physical layer parameters. And, the different types of topology changes that can occur include for example: (1) movement of a node; (2) quality variations in a channel between the source node and the destination node; (3) changes in traffic patterns in the multihop network; (4) changes in transmit patterns (e.g., power, beamforming direction) in the multihop network; and (5) changes in resource allocations in the multihop network (100, 400).

The present invention is implemented by a network according to claim 1, by a method, according to claim 8, and by a node according to claim 15.

**BRIEF DESCRIPTION OF THE DRAWINGS**

A more complete understanding of the present invention may be had by reference to the following detailed description when taken in conjunction with the accompanying drawings wherein:

FIGURE 1 is a block diagram that illustrates an exemplary multihop network which has nodes that implement a reactive routing protocol in accordance with the present invention;

FIGURE 2 is a flowchart illustrating the steps of a preferred method for implementing the reactive routing protocol within the multihop network of FIGURE 1 in accordance with the present invention;

FIGURE 3 is a block diagram of an exemplary beacon that can be transmitted from an active node within the multihop network of FIGURE 1 in accordance with step 202 of the method of FIGURE 2; and

FIGURES 4A-4D are block diagrams illustrating different ways the reactive routing protocol can be used to adapt a route between a source node and a destination node in the multihop network of FIGURE 1.

**DETAILED DESCRIPTION OF THE DRAWINGS**

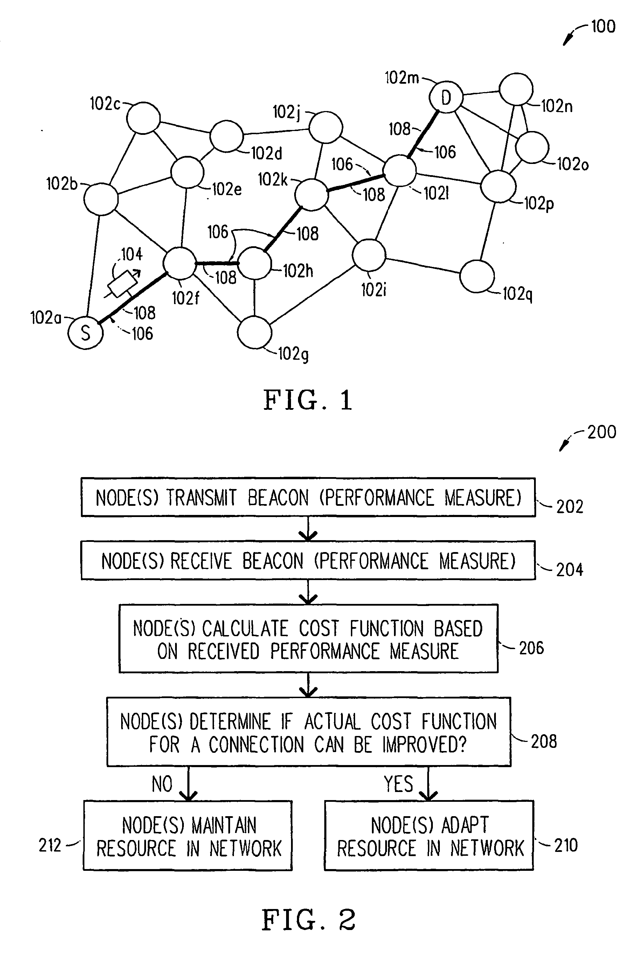

Referring to FIGURE 1, there is disclosed a block diagram of an exemplary multihop network 100 that has nodes 102a, 102b...102q (17 shown) which implement a reactive routing protocol in accordance with method 200 of the present invention. As shown, the multihop network 100 has multiple nodes 102a, 102b...102q that operate in a wireless medium where traffic sent between two nodes 102a and 102m (for example) is called a flow 104 (one shown). The node originating the transfer of data in a flow 104 is called a source node 102a and the node terminating the data is called a destination node 102m. The multihop network 100 can have zero, one or a multitude of flows 104 at each instant between any two nodes 102a, 102b...102q. Each flow 104 is carried in a connection 106 where only one connection 106 between nodes 102a and 102m is shown. It should be appreciated that multiple flows 104 may be multiplexed into a connection 106 and multiple connections 106 may be established for each source node 102a as well as for each destination node 102m. In addition, the same source node 102a and destination node 102m may have multiple connections 106 as well as multiple flows 104. Each connection 106 is defined through a path 108 (route) and is characterized by: (1) the identities of active nodes 102a, 102f, 102h, 102k, 1021 and 102m (for example); (2) the channels; and (3) the link parameters along the path 108. In an alternative embodiment of the present invention, the connection 106 is characterized by: (1) the path 108; (2) the link parameters; and (3) the transmit instances. The latter type of connection 106 is associated with non-slotted transmissions in the time domain, whereas the former type of connection 106 is more TDMA (time division multiple access), FDMA (frequency division multiple access) and OFDMA (orthogonal frequency division multiple access) oriented.

As shown, the path 108 is assembled by shorter links between adjacent active nodes 102a, 102f, 102h, 102k, 1021 and 102m which form the connection 106. The parameters of a link associated with a transmission of a flow 104 along path 108 are characterized for example by: (1) transmit power; (2) modulation; (3) direction, and (4) MIMO (Multiple-Input-Multiple-Output) parameters. And, the parameters of a link associated with reception of a flow 104 along path 108 may include for example information about the tuning of antenna arrays, provided these parameters are used. Each connection 106 typically has an upper data rate limit and the flow 104 may use a fraction of the available data rate or the full bandwidth. The nodes 102a, 102b...102q within reach of each other are said to be neighbors. There are several definitions of the term "within reach". For example, nodes can be "within reach" of each other whenever one node has an average SNR (signal-to-noise ratio) at reception that exceeds a predetermined level when the maximum permitted transmit power is used at the sending node and no interfering nodes exist. Finally, it should be appreciated that the communications within the multihop network 100 are on separate channels which are typically orthogonal and hence should not interfere with each other. And, the changing from one channel to another in a node 102a, 102b...102q is called channel switching.

In accordance with the present invention, each of the nodes 102a, 102b...102q within the multihop network 100 implement a reactive routing protocol (method 200) that is a marked improvement over the aforementioned traditional reactive routing protocols. Again, the traditional reactive routing protocols like the AODV and DSR have a drawback in which they fail to do enough to optimize the performance of a connection between two nodes. The multihop network 100 of the present invention addresses this need by implementing a new reactive routing protocol (method 200) that adapts one or more resources in the multihop network 100 in response to a topology change in the multihop network 100 in order to optimize the performance of the connection 106 between the source node 102a and the destination node 102m. The types of resources that can be adapted include for example: (1) a route; (2) a channel; and/or (3) physical layer parameters. And, the different types of topology changes that can occur include for example: (1) movement of nodes 102a, 102b...102q; (2) quality variations in a channel between the source node 102a and the destination node 102m (not necessarily only for links currently forwarding data for the connection considered but also for links that may be used instead); (3) changes in traffic patterns in the multihop network 100; (4) changes in transmit patterns (e.g., power, beamforming direction) in the multihop network 100; and (5) changes in resource allocations in the multihop network 100. A more detailed description about the different aspects and features of the reactive routing protocol (method 200) are provided below with respect to FIGURES 2-4.

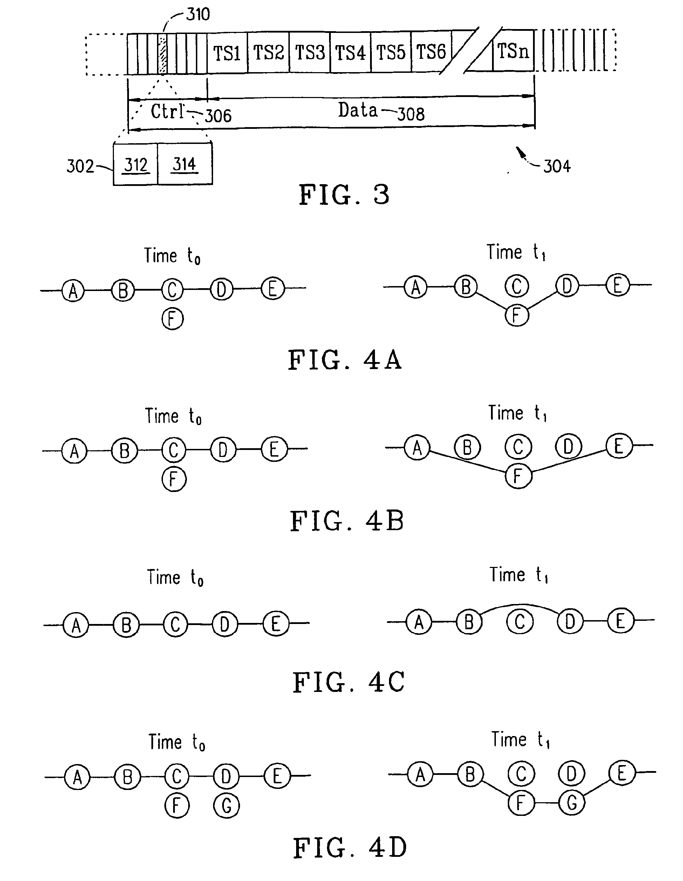

Referring to FIGURE 2, there is a flowchart illustrating the steps of the preferred method 200 for implementing the reactive routing protocol within the multihop network 100. Beginning at step 202, the active nodes 102a, 102f, 102h, 102i, 1021 and 102m (for example) which are located within the connection 106 transmit a beacon 302 (see FIGURE 3) that contains one or more measures of performance for the connection 106. In one embodiment, the beacon 302 may be generated once a frame 304 which includes a control part 306 and a TDMA data carrying part 308. The beacon 302 can be assigned a mini timeslot 310 so that it will not collide with beacons 302 (not shown) transmitted from adjacent nodes. The beacon 302 could be transmitted with a power level and data rate that where selected so the beacon 302 has a reach that is as long or longer than other messages sent by nodes 102a, 102f, 102h, 102k, 1021 and 102m.

The beacon 302 further includes a general broadcast part 312 and a connection specific part 314. In the general broadcast part 312, the power for the beacon 302 is indicated. This allows any node 102a, 102b... 102q that is "within reach" to determine an open loop path loss. The ID of the transmitting node 102a, 102f, 102h, 102i, 1021 or 102m (for example) is also indicated. In the connection specific part 314, a connection ID, connection rate, transmit/receive ID and/or transmit power/CIR (Carrier-to-Interference Ratio) can be indicated. In addition, the connection specific part 314 indicates a measure of performance for each connection 106. The measure of performance can be an accumulated cost for the whole connection 106. The maximum allowed power, $P_{max}$, for each timeslot or equivalent connection is another performance measure. $P_{max}$ reflects either a power capability of the transmitting node 102a, 102f, 102h, 102k, 1021 or 102m or a maximum power that can be used not to interfere with other ongoing connections 106.

At step 204, the neighboring nodes 102b, 102d, 102e, 102g, 102i, 102j, 102q, 102p and/or 102o (for example) receive one or more of the beacons 302 transmitted from the active nodes 102a, 102f, 102h, 102k, 1021 and 102m. The active nodes 102a, 102f, 102h, 102k, 1021 or 102m also receive beacons 302 transmitted from other active nodes 102a, 102f, 102h, 102k, 1021 or 102m. For example, active node 102f and 102k receive the beacons 302 from active node 102h.

At step 206, each neighboring node 102b, 102d, 102e, 102g, 102i, 102j, 102q, 102p and/or 102o calculates a cost function based on the measure of performance and other information (optional) in each received beacon 302. Likewise, each active node 102a, 102f, 102h, 102k, 1021 and/or 102m calculates a cost function based on the measure of performance and other information (optional) in each received beacon 302.

At step 208, each neighboring node 102b, 102d, 102e, 102g, 102i, 102j, 102q, 102p and/or 102o and active nodes 102a, 102f, 102h, 102k, 1021 or 102m determines whether the cost function for the connection 106 between the source node 102a and the destination node 102m can be improved by adapting at least one resource (e.g., route, channel and/or physical layer parameters) in the multihop network 100. If the answer at step 208 is yes, then step 210 is performed by the relevant neighboring node 102g (for example) or active node 102f (for example) which adapts at least one resource to improve the cost function for the connection 106 between the source node 102a and the destination node 102m. Typically, the neighboring node 102g (for example) would adapt a route resource as described in greater detail below with respect to FIGURES 4A, 4B and 4D. And, the active node 102f (for example) would adapt a route resource, a channel resource or a physical layer parameter resource as described in greater detail with respect to FIGURE 4C. In one embodiment, the relevant neighboring node 102g (for example) or active node 102f (for example) can adapt or reallocate the resource in a distributed manner relatively fast when an average performance measure of a topology change such as an average path loss is used to determine if the cost function of the connection 106 can be improved between the source node 102a and the destination node 102m. In another embodiment, the relevant neighboring node 102g (for example) or active node 102f (for example) can adapt or reallocate the resource in an opportunistic manner when a performance measure of an instantaneous or real-time topology change such as an instant CIR is used to determine if the cost function of the connection 106 can be improved between the source node 102a and the destination node 102m. In either embodiment, the relevant neighboring node 102g (for example) or active node 102f (for example) is allowed to adapt the resource if that adaptation does not adversely affect the performance of another connection in the multihop network 100. If the answer at step 208 is no, then step 212 is performed where the neighboring node 102b, 102d, 102e, 102g, 102i, 102j, 102q, 102p and/or 102o or active node 102a, 102f, 102h, 102k, 1021 or 102m simply maintains the resources in the connection 106 between the source node 102a and the destination node 102m.

A more detail description about some of the different ways the method 200 and reactive routing protocol can be used to adapt a route between a source node and a destination node is provided below with respect to FIGURES 4A-4D. To better describe some of the features of the present invention, the multihop network 400 used below has a simpler configuration than the multihop network 100. Of course, it should be noted that the number of nodes shown within the multihop networks 100 and 400 have been selected for simplicity of illustration and that the number of nodes and their configuration should not be a limitation on the present invention.

Referring to FIGURES 4A-4D, four basic cases are shown as to how the route for a connection between a source node A and destination node E can be adapted in accordance with step 210 of method 200. In the first case shown in FIGURE 4A, node F listens at time to to beacons 302 (not shown) sent by active nodes B and D (for example). And then at time $t_1$, node F inserts itself into the connection and excludes node C from the connection between the source node A and destination node E, provided an objective cost function is optimized in accordance with steps 206, 208 and 210 of method 200. It should be noted that in this case and the other examples described below where the reactive routing protocol adapts a resource in a distributed manner then one event preferably take place at a time so as to avoid concurrent adaptations.

In the second case shown in FIGURE 4B, node F listens at time to to beacons 302 (not shown) sent by active nodes A, B, C, D and E (for example). And then at time $t_1$, node F inserts itself into the connection and excludes multiple nodes B, C and D from the connection between the source node A and destination node E, provided an objective cost function is optimized in accordance with steps 206, 208 and 210 of method 200.

In the third case shown in FIGURE 4C, active node C listens at time $t_0$ to beacons 302 (not shown) sent by active nodes B and D (for example). And then at time $t_1$, node C noticed that it offers a suboptimum path and initiates a path change where it excludes itself from the connection between the source node A and destination node E, provided an objective cost function is optimized in accordance with steps 206, 208 and 210 of method 200. As can be seen, the active node C in this case is capable of performing steps 204, 206, 208 and 210 in method 200.

Several ways exist on how these three cases can be implemented in accordance with method 200. In one example, a good choice is to exploit the accumulated cost (performance measure) that is distributed along a path and announced in a beacon 302. The cost along the path can then be compared with the cost determined by the node that overhears beacon(s) 302 and checks whether it should insert/exclude itself into/from the connection between source node A and destination node E.

In another example, transmit power (performance measure) can be used as a cost metric. For example, consider node j that estimates the cost for node j+1 based on the actual cost from node $j$-1. The costs incurred from node $j$-1 to $j$ as well as from node $j$ to $j+1$ are denoted with $\Delta C$ and relevant index. The total estimated cost at node $j+1$ is then:

$$\hat{C}_{j+1} = \Delta C_{j,j+1} + \Delta C_{j-1,j} + C_{j-1}$$

A new path is considered if the estimated cost is lower than the old existing cost as indicated below:

$$\textbf{New path} = \begin{cases} \text{Yes, if } \hat{C}_{j+1} < C_{j+1} \\ \text{No if } \hat{C}_{j+1} > C_{j+1} \end{cases}$$

The delta costs $\Delta C$ is related to the minimum power required to satisfy a SNR target $\Gamma_0$ (for the required rate in question). As an example for node $j$-1 to $j$, the minimum power P can be calculated as:

$$P_{j-1} = \frac{\Gamma_0 \cdot \sigma_j^2}{G_{j-1,j}}$$

where $G_{j-1,j}$ is the path gain from node $j$-1 to $j$ and $\sigma_j^2$ is the receiver noise and interference power for node $j$. In addition to this, one may also ensure that any node (in this example, node $j$-1) is not allowed to transmit with power strong enough to lower the CIR of other existing connections below their respective target CIR, as indicated below:

$$\Delta C_{j-1,j} = \begin{cases} P & \text{,if P} < P_{max} \\ \infty & \text{,if P} > P_{max} \end{cases}$$

$P_{max}$ for a node can be determined for each timeslot (and thereby per connection) and distributed with the beacon 302. This procedure is preferably executed for each channel, allowing node j to determine also an optimal channel. In addition to the above power minimization criteria and CIR guarantee criteria, other criteria may be included. Examples of such criteria may include filtering of the cost (e.g. time averaging), hysteresis (to avoid ping-pong effects) and time related conditions.

It has been shown in FIGURES 4A-4B where only one node F inserts itself into a connection 406 between a source node A and a destination node E. However, a chain of nodes F and G could also be inserted into a connection between a source node A and a destination node E in an analogous manner, by offering a path that minimized the cost function (see FIGURE 4D). In particular, nodes F and G listen at time to to beacons 302 (not shown) sent by active nodes A, B, C, D and E (for example). And then at time $t_1$, nodes F and G insert themselves into the connection and exclude multiple nodes C and D from the connection between the source node A and the destination node E, provided an objective cost function is optimized in accordance with steps 206, 208 and 210 of method 200.

One way to enable nodes F and G to be inserted into a connection like the one shown in FIGURE 4D is to build (reasonably long) shortest path trees outgoing form each node A, B, C, D and E along a connection. Shortest paths that pass through nodes F and G further downstream of the existing connection evaluate whether the cost offered by any shortest path trees is improved when compared to existing connection path. Similar to the first and second cases shown in FIGURES 4A and 4B, nodes F and G that are not part of the existing connection but are part of one or more shortest path trees rooted at one or more nodes along the connection may actively insert themselves, provided that a improved path is found. To limit the complexity of this embodiment, a limited number of hops may be allowed for the shortest path trees.

To implement the case shown in FIGURE 4D, the objective cost function may also incorporate an additional cost factor $C_{extr}$ that ensures any adaptation by step 210 strives towards using the shortest path to connect the source node A and destination node E. This extra cost factor can be determined in following manner wherein every node generates a shortest path tree (performance measure) through slow proactive routing using a Bellman Ford algorithm (for example). Each node i then has a cost from itself to every other node j. The cost is denoted Cij. Node i can then determine the extra cost depending on its cost to any two nodes S and D (not shown) as indicated below:

$$C_{extra} = f(C_{iS}, C_{iD})$$

where the function can be an addition or multiplication. This ensures that the extra cost increases as it gets further away from the source node and destination node. This cost is then also included with the basic cost determination in step 208 through a simple addition or other operation.

Referring back to the adaptation step 210 in method 200, it should be appreciated that the reactive routing protocol can enable the resources of the multihop network 100 and 400 to be adapted in a "distributed manner" in response to topology changes within the multihop network 100 and 400 to optimize the performance of a connection between a source node and a destination node. For a well behaved distributed operation, i.e. avoiding time races between control signals potentially resulting in inefficient optimizations (or potential deadlocks), special scheduling may be needed for the control signaling. The scheduling is arranged in such way that only one event in a local region preferably, i.e. resource optimization take place at a time. This characteristic, we denote as locally atomic. To ensure that the multihop networks 100 and 400 are locally atomic for control traffic, wherein only one event takes place at a time, the multihop networks 100 and 400 can use any distributed multiple access protocol having the required characteristic, such as the one described in an article by R. Rozovsky et al. "SEEDEX: A MAC protocol for ad hoc networks" Mobilhoc 2001 proceedings . The multiple access protocols may in addition to being used when reallocating resources can also be used in assigning the transmit times of the beacons 302.

From the foregoing, it can be readily appreciated by those skilled in the art that the present invention provides a multihop network, node and reactive routing protocol which helps to optimize the performance or quality of a connection between a source node and a destination node. As disclosed, the present invention operates to continuously adapt the multihop network's resources in response to the multihop network's topology changes to optimize the performances of connections between source and destination nodes. When adapting the connection, the route, channel and Physical (e.g. power) layer parameters can be jointly and continuously adapted in response to topology changes. In another embodiment, the resource adaptation could take place on a timescale that is fast enough to follow instantaneous channel fluctuations, such as those incurred by channel fading and traffic fluctuations, and hence this type of resource adaptation would be of an opportunistic character where peak of channel opportunities are exploited.

Following are some additional features, advantages and uses of the multihop network, node and reactive routing protocol of the present invention:

- The multihop network can be associated with ad hoc networks where nodes are mostly mobile and no central coordinating infrastructure exists. The nodes in such a network can be a laptop computer, mobile phone and/or a personal digital assistant (PDA). However, the multihop network can be applied when nodes are fixed. One such scenario targets rural area Internet

- access and uses fixed nodes attached to the top of house roofs, lamp posts and so forth.

- One advantage of the present invention is that when the channel fluctuations occur with a coherence time on the order of or greater than the resource assignment response time, then channel assignment within the multihop network will be opportunistic.

• Another advantage of the present invention is that multiple layer functions are jointly and continuously optimized which promises improved performance in the multihop network.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions

**Claims**

1.  A multihop network (100, 400) comprising:

     a source node (102a, A);
     at least one neighboring node (102b, 102d, 102e, 102g, 102i, 102j, 102p, 102o, F and G),
     at least one active node (102f, 102h, 102k, 102l, B, C and D); and
     a destination node (102m, E),
     wherein the neighboring node (102b, 102d, 102e, 102g, 102i, 102j, 102p, 102o, F and G) is within reach of the source node (102a, A), the at least one active node (102f, 102h, 102k, 1021, B, C and D) and the destination node (102m, E);
     wherein the multihop network (100, 400) has a topology;
     wherein the active node (102f, 102h, 102k, 102l, B, C and D) is located in a connection (106) between the source node (102a, A) and the destination node (102m, E), and is capable of receiving, from another active node, and transmitting (202), to the neighboring node, a beacon containing a measure of performance for the connection (106) between the source node (102a, A) and the destination node (102m, E); which measure of performance contained in the beacon is related to a change of the topology of the multihop network (100, 400);
     wherein said change of topology includes one or more of the following:

          movement of one of the nodes;
          quality variations in a channel between said source node (102a, A) and said destination node (102m, E), which quality variations comprises channel fading;
          changes in patterns of a data traffic in the multihop network (100, 400);
          changes in transmit patterns of the data traffic in the multihop network (100, 400); or changes in allocations of a network resource in the multihop network (100,400), **characterized by**

     said nodes implementing a reactive routing protocol where the network resource of the multihop network (100, 400) is adapted in a distributed manner by the neighboring node or the active node in response to the change of the topology in the multihop network (100, 400) to optimize the performance of the connection (106) between said source node (102a, A) and said destination node (102m, E),
     which change of topology is determined to have occurred based on the measure of performance contained in the beacon;
     which distributed manner provides one resource adaptation at a time;
     wherein said network resource includes one or more of the following:

          a route (108);
          the channel; or
          physical layer parameters; and

     wherein the connection (106) between the source node (102a, A) and the destination node (102m, E) is defined through the route (108) and the channel.

2.  The multihop network of Claim 1, wherein the multihop network (100, 400) is a wireless multihop network; and wherein the data traffic is transmitted between the source node (102a, A) and the destination node (102m, E).

3.  The multihop network of Claim 1, wherein said one of the neighboring node or active node adapts the resource in an opportunistic manner in response to an instantaneous topology change in the multihop network (100, 400).

4.  The multihop network of Claim 1, wherein said one of the neighboring node or active node adapts the resource in the distributed manner where the at least one neighboring node (F, G) is inserted into the connection between said source node and said destination node, and where the at least one active node (C, D) is removed from the connection between said source node and said destination node, which distributed manner provides one resource adaptation at a time.

5.  The multihop network of Claim 1, wherein said one of the neighboring node or active node adapts the resource in a distributed manner where at least one of the active node (C, D) is removed from the connection between said source node and said destination node, and which distributed manner provides one resource adaptation at a time.

6. The multihop network of claim 2, wherein the active node performs the following step:

transmitting (202) the beacon (302) containing the measure of performance for the connection between the source node and the destination node;
and wherein the at least one neighboring node (102b, 102d, 102e, 102g, 102i, 102j, 102p, 102o, F and G) is associated with the connection between the source node and the destination node, wherein the neighboring node performs the following steps:
receiving (204) the transmitted beacon;
calculating (206) a cost function based on the measure of performance in the received beacon;
adapting (210) the network resource in the wireless multihop network if it is possible to improve the cost function with regards to signal to noise ratio, power, Carrier-to-Interference Ratio, for the connection between the source node and the destination node.

7. The multihop network of claim 6, wherein the beacon includes a general broadcast part and a connection related part that contains the measure of performance which includes:

an accumulated cost for the connection between the source node and the destination node; or
a maximum allowed power for transmitting active node.

8. A method for optimizing the performance of a connection (106) between a source node (102a, A) and a destination node (102m, E) in a multihop network (100, 400),
the multihop network (100, 400) comprising the source node (102a, A), at least one neighboring node (102b, 102d, 102e, 102g, 102i, 102j, 102p, 102o, F and G), at least one active node (102f, 102h, 102k, 1021, B, C and D); and the destination node (102m, E),
wherein the neighboring node (102b, 102d, 102e, 102g, 102i, 102j, 102p, 102o, F and G) is within reach of the source node (102a, A), the at least one active node (102f, 102h, 102k, 1021, B, C and D) and the destination node (102m, E);
wherein the multihop network (100, 400) has a topology;
wherein the active node (102f, 102h, 102k, 1021, B, C and D) is located in the connection (106) between the source node and the destination node;

wherein the method comprising:

at the active node, *receiving,* from another active node and *transmitting (202),* to a neighboring node, a beacon containing a measure of the performance for the connection (106) between the source node and the destination node; which measure of performance contained in the beacon is related to a change of the topology of the multihop network (100, 400); wherein said change of topology includes one or more of the following:

movement of one of the nodes;
quality variations in a channel between said source node (102a, A) and said destination node (102m, E), which quality variations comprises channel fading;
changes in patterns of a data traffic in the multihop network (100, 400);
changes in transmit patterns of the data traffic in the multihop network (100, 400); or
changes in allocations of a network resource in the multihop network (100,400);

*determining,* at the active node or the neighboring node, the change of topology based on the measure of performance contained in the beacon;
**characterized by**
said nodes implementing a reactive routing protocol; and wherein the method further comprises:

*adapting* in a distributed manner by the neighboring node or the active node the network resource of the multihop network in response to the change of the topology in the multihop network to optimize the performance of the connection (106) between said source node (102a, A) and said destination node (102m, E);
which distributed manner provides one resource adaptation at a time;
wherein said network resource includes one or more of the following:

a route (108);
the channel; or
physical layer parameters; and

wherein the connection between the source node and the destination node is defined through the route (108) and the channel.

9. The method of Claim 8, wherein the multihop network is a wireless multihop network; and wherein the method further comprises:

*transmitting* the data traffic between the source node (102a, A) and the destination node (102m, E).

10. The method of Claim 8, wherein said one of the neighboring node or active node adapts the resource in an opportunistic manner in response to an instantaneous topology change in the multihop network.

11. The method of Claim 8, wherein the adapting in the distributed manner by the neighboring node or the active node further comprising:

*inserting* the at least one neighboring node (F, G) into the connection between said source node and said destination node and
*removing* the at least one active node (C, D) from the connection between said source node and said destination node,
which distributed manner provides one resource adaptation at a time.

12. The method of Claim 8, wherein the adapting in the distributed manner by the neighboring node or the active node further comprising:

*removing* at least one of the active node (C, D) from the connection between said source node and said destination node, and which distributed manner provides one resource adaptation at a time.

13. The method of claim 9, wherein the active node performs the following step:

*transmitting* (202) the beacon (302) containing the measure of performance for the connection between the source node and the destination node;
and wherein the at least one neighboring node (102b, 102d, 102e, 102g, 102i, 102j, 102p, 102o, F and G) is associated with the connection between the source node and the destination node, wherein the neighboring node performs the following steps:
*receiving* (204) the transmitted beacon;
*calculating* (206) a cost function based on the measure of performance in the received beacon;
*adapting* (210) the network resource in the wireless multihop network if it is possible to improve the cost function with regards to signal to noise ratio, power, Carrier-to-Interference Ratio, for the connection between the source node and the destination node.

14. The method of claim 13. wherein the beacon includes a general broadcast part and a connection related part that contains the measure of performance which includes:

an accumulated cost for the connection between the source node and the destination node; or
a maximum allowed power for transmitting active node.

15. A node (102b, 102d-1, 102p-o, B-D, F, G) for optimizing the performance of a connection (106) between a source node (102a, A) and a destination node (102m, E) in a multihop network (100, 400), wherein the node is within reach of the source node (102a, A) and the destination node (102m, E);
wherein the multihop network (100, 400) has a topology;
wherein the node is capable of receiving and transmitting (202) a beacon containing a measure of performance for a connection (106) between the source node (102a, A) and the destination node (102m, E);
which measure of performance contained in the beacon is related to a change of the topology of the multihop network (100; 400).
wherein said change of topology includes one or more of the following:

movement of one of the nodes;
quality variations in a channel between said source node (102a, A) and said destination node (102m, E), which quality variations comprises channel fading;
changes in patterns of a data-traffic in the multihop network (100, 400);
changes in transmit patterns of the data traffic in the multihop network (100, 400); or
changes in allocations of a network resource in the multihop network (100,400),
**characterized by**

said node implementing a reactive routing protocol where the network resource of the multihop network (100, 400) is adapted in a distributed manner by the node in response to the change of the topology in the multihop network (100, 400) to optimize the performance of the connection (106) between said source node (102a, A) and said destination node (102m, E),
which change of topology is determined to have occurred based on the measure of performance contained in the beacon;
which distributed manner provides one resource adaptation at a time;
wherein said network resource includes one or more of the following:

a route (108);
the channel; or
physical layer parameters; and

wherein the connection (106) between the source node (102a, A) and the destination node (102m, E) is defined through the route (108) and the channel.

16. The node (102b, 102d-1, 102p-o, B-D, F, G) according to claim 15, wherein the node is an active node (102f, 102h, 102k, 1021, B, C and D) or a neighboring node (102b, 102d, 102e, 102g, 102i, 102j, 102p, 102o, F and G), which active node is located in a connection (106) between the source node and the destination node and which neighboring node is within reach of the source node, the active node and the destination node.

**Patentansprüche**

1. Multihop-Netzwerk (100, 400), umfassend:

einen Quellknoten (102a, A);
mindestens einen Nachbarknoten (102b, 102d, 102e, 102g, 102i, 102j, 102p, 102o, F und G),
mindestens einen aktiven Knoten (102f, 102h, 102k, 1021, B, C und D); und
einen Zielknoten (102m, E),
worin der Nachbarknoten (102b, 102d, 102e, 102g, 102i, 102j, 102p, 102o, F und G) in Reichweite des Quellknotens (102a, A), des mindestens einen aktiven Knotens (102f, 102h, 102k, 1021, B, C und D) und des Zielknotens (102m, E) ist;
worin das Multihop-Netzwerk (100, 400) eine Topologie hat;
worin der aktive Knoten (102f, 102h, 102k, 1021, B, C und D) in einer Verbindung (106) zwischen dem Quellknoten (102a, A) und dem Zielknoten (102m, E) angeordnet ist und imstande ist, ein Beacon-Signal, das ein Maß des Leistungsvermögens für die Verbindung (106) zwischen dem Quellknoten (102a, A) und dem Zielknoten (102m, E) enthält, von einem anderen aktiven Knoten zu empfangen und es zu dem Nachbarknoten zu übertragen (202), wobei dieses im Beacon-Signal enthaltene Maß des Leistungsvermögens mit einer Veränderung der Topologie des Multihop-Netzwerks (100, 400) in Beziehung steht;
worin die Veränderung der Topologie eines oder mehrere der folgenden einschließt:
Bewegung eines der Knoten;
Qualitätsschwankungen in einem Kanal zwischen dem Quellknoten (1 02a, A) und dem Zielknoten (102m, E), wobei diese Qualitätsschwankungen Kanalschwund umfassen;
Veränderungen in Mustern eines Datenverkehrs im Multihop-Netzwerk (100, 400);
Veränderungen in Sendemustern des Datenverkehrs im Multihop-Netzwerk (100, 400); oder

Veränderungen in Zuteilungen einer Netzwerkressource im Multihop-Netzwerk (100, 400);
**dadurch gekennzeichnet, dass**:
die Knoten ein Protokoll zur reaktionsfähigen Leitweglenkung implementieren, bei dem die Netzwerkressource des Multihop-Netzwerks (100, 400) durch den Nachbarknoten oder den aktiven Knoten als Antwort auf die Veränderung der Topologie im Multihop-Netzwerk (100, 400) auf verteilte Weise angepasst wird, um das Leistungsvermögen der Verbindung (106) zwischen dem Quellknoten (102a, A) und dem Zielknoten (102m, E) zu optimieren,
wobei auf der Grundlage des im Beacon-Signal enthaltenen Maßes des Leistungsvermögens bestimmt wird, dass diese Veränderung der Topologie aufgetreten ist;
wobei diese verteilte Weise eine Ressourcenanpassung auf einmal bereitstellt;
wobei die Netzwerkressource eines oder mehrere der folgenden einschließt:
einen Leitweg (108);
den Kanal; oder
Bitübertragungsschichtparameter; und
worin die Verbindung (106) zwischen dem Quellknoten (102a, A) und dem Zielknoten (102m, E) durch den Leitweg (108) und den Kanal definiert ist.

2. Multihop-Netzwerk nach Anspruch 1, worin das Multihop-Netzwerk (100, 400) ein drahtloses Multihop-Netzwerk ist und worin der Datenverkehr zwischen dem Quellknoten (102a, A) und dem Zielknoten (102m, E) übertragen wird.

3. Multihop-Netzwerk nach Anspruch 1, worin der eine der folgenden, nämlich der Nachbarknoten oder der aktive Knoten, die Ressource als Antwort auf eine momentane Topologieveränderung im Multihop-Netzwerk (100, 400) auf eine opportunistische Weise anpasst.

4. Multihop-Netzwerk nach Anspruch 1, worin der eine der folgenden, nämlich der Nachbarknoten oder der aktive Knoten, die Ressource auf die verteilte Weise anpasst, bei welcher der mindestens eine Nachbarknoten (F, G) in die Verbindung zwischen dem Quellknoten und dem Zielknoten eingefügt wird und bei welcher der mindestens eine aktive Knoten (C, D) aus der Verbindung zwischen dem Quellknoten und dem Zielknoten entfernt wird, wobei diese verteilte Weise eine Ressourcenanpassung auf einmal bereitstellt.

5. Multihop-Netzwerk nach Anspruch 1, worin der eine der folgenden, nämlich der Nachbarknoten oder der aktive Knoten, die Ressource auf eine verteilte Weise anpasst, bei der mindestens einer der aktiven Knoten (C, D) aus der Verbindung zwischen dem Quellknoten und dem Zielknoten entfernt wird und wobei diese verteilte Weise eine Ressourcenanpassung auf einmal bereitstellt.

6. Multihop-Netzwerk nach Anspruch 2, worin der aktive Knoten den folgenden Schritt durchführt:

Übertragen (202) des Beacon-Signals (302), welches das Maß des Leistungsvermögens für die Verbindung zwischen dem Quellknoten und dem Zielknoten enthält; und worin der mindestens eine Nachbarknoten (102b, 102d, 102e, 102g, 102i, 102j, 102p, 102o, F und G) mit der Verbindung zwischen dem Quellknoten und dem Zielknoten verknüpft ist, worin der Nachbarknoten die folgenden Schritte durchführt: Empfangen (204) des übertragenen Beacon-Signals; Berechnen (206) einer Kostenfunktion auf der Grundlage des Maßes des Leistungsvermögens im empfangenen Beacon-Signal; Anpassen (210) der Netzwerkressource im drahtlosen Multihop-Netzwerk, wenn es möglich ist, die Kostenfunktion für die Verbindung zwischen dem Quellknoten und dem Zielknoten in Bezug auf Signal-Rauschabstand, Leistung, Träger-Störabstand zu verbessern.

7. Multihop-Netzwerk nach Anspruch 6, worin das Beacon-Signal einen allgemeinen Rundsendeteil und einen verbindungsbezogenen Teil einschließt, der das Maß des Leistungsvermögens enthält, welches einschließt:

akkumulierte Kosten für die Verbindung zwischen dem Quellknoten und dem Zielknoten; oder eine maximal erlaubte Leistung für den übertragenden aktiven Knoten.

8. Verfahren zur Optimierung des Leistungsvermögens einer Verbindung (106) zwischen einem Quellknoten (102a, A) und einem Zielknoten (102m, E) in einem Multihop-Netzwerk (100, 400), wobei das Multihop-Netzwerk (100, 400) den Quellknoten (102a, A), mindestens einen Nachbarknoten (102b, 102d, 102e, 102g, 102i, 102j, 102p, 102o, F und G), mindestens einen aktiven Knoten (102f, 102h, 102k, 1021, B, C und D) und den Zielknoten (102m, E) umfasst, worin der Nachbarknoten (102b, 102d, 102e, 102g, 102i, 102j, 102p, 102o, F und G) in Reichweite des Quellknotens (102a, A), des mindestens einen aktiven Knotens (102f, 102h, 102k, 1021, B, C und D) und des Zielknotens (102m, E) ist; worin das Multihop-Netzwerk (100, 400) eine Topologie hat; worin der aktive Knoten (102f, 102h, 102k, 1021, B, C und D) in der Verbindung (106) zwischen dem Quellknoten und dem Zielknoten angeordnet ist; worin das Verfahren umfasst:

im aktiven Knoten erfolgendes Empfangen eines Beacon-Signals, das ein Maß des Leistungsvermögens für die Verbindung (106) zwischen dem Quellknoten und dem Zielknoten enthält, von einem anderen aktiven Knoten und Übertragen desselben zu einem Nachbarknoten (202), wobei dieses im Beacon-Signal enthaltene Maß des Leistungsvermögens mit einer Veränderung der Topologie des Multihop-Netzwerks (100, 400) in Beziehung steht; worin die Veränderung der Topologie eines oder mehrere der folgenden einschließt:

Bewegung eines der Knoten; Qualitätsschwankungen in einem Kanal zwischen dem Quellknoten (1 02a, A) und dem Zielknoten (102m, E), wobei die Qualitätsschwankungen Kanalschwund umfassen; Veränderungen in Mustern des Datenverkehrs im Multihop-Netzwerk (100, 400); Veränderungen in Sendemustern des Datenverkehrs im Multihop-Netzwerk (100, 400); oder Veränderungen in Zuteilungen einer Netzwerkressource im Multihop-Netzwerk (100, 400); im aktiven Knoten oder im Nachbarknoten erfolgendes Bestimmen der Veränderung der Topologie auf der Grundlage des im Beacon-Signal enthaltenen Maßes des Leistungsvermögens; **dadurch gekennzeichnet, dass**:

die Knoten ein Protokoll zur reaktionsfähigen Leitweglenkung implementieren; und worin das Verfahren ferner umfasst: durch den Nachbarknoten oder den aktiven Knoten als Antwort auf die Veränderung der Topologie im Multihop-Netzwerk (100, 400) erfolgendes Anpassen der Netzwerkressource des Multihop-Netzwerks auf verteilte Weise, um das Leistungsvermögen der Verbindung (106) zwischen dem Quellknoten (102a, A) und dem Zielknoten (102m, E) zu optimieren; wobei diese verteilte Weise eine Ressourcenanpassung auf einmal bereitstellt; worin die Netzwerkressource eines oder mehrere der folgenden einschließt: einen Leitweg (108); den Kanal; oder Bitübertragungsschichtparameter; und worin die Verbindung zwischen dem Quellknoten und dem Zielknoten durch den Leitweg (108) und den Kanal definiert ist.

**9.** Verfahren nach Anspruch 8, worin das Multihop-Netzwerk ein drahtloses Multihop-Netzwerk ist und worin das Verfahren ferner umfasst:

Übertragen des Datenverkehrs zwischen dem Quellknoten (102a, A) und dem Zielknoten (102m, E).

**10.** Verfahren nach Anspruch 8, worin der eine der folgenden, nämlich der Nachbarknoten oder der aktive Knoten, die Ressource als Antwort auf eine momentane Topologieveränderung im Multihop-Netzwerk auf opportunistische Weise anpasst.

**11.** Verfahren nach Anspruch 8, worin das Anpassen auf die verteilte Weise durch den Nachbarknoten oder den aktiven Knoten ferner umfasst:

Einfügen des mindestens einen Nachbarknotens (F, G) in die Verbindung zwischen dem Quellknoten und dem Zielknoten und Entfernen des mindestens einen aktiven Knotens (C, D) aus der Verbindung zwischen dem Quellknoten und dem Zielknoten, wobei diese verteilte Weise eine Ressourcenanpassung auf einmal bereitstellt.

**12.** Verfahren nach Anspruch 8, worin das Anpassen auf die verteilte Weise durch den Nachbarknoten oder den aktiven Knoten ferner umfasst:

Entfernen von mindestens einem der aktiven Knoten (C, D) aus der Verbindung zwischen dem Quellknoten und dem Zielknoten, und wobei diese verteilte Weise eine Ressourcenanpassung auf einmal bereitstellt.

**13.** Verfahren nach Anspruch 9, worin der aktive Knoten den folgenden Schritt durchführt:

Übertragen (202) des Beacon-Signals (302), welches das Maß des Leistungsvermögens für die Verbindung zwischen dem Quellknoten und dem Zielknoten enthält; und worin der mindestens eine Nachbarknoten (102b, 102d, 102e, 102g, 102i, 102j, 102p, 102o, F und G) mit der Verbindung zwischen dem Quellknoten und dem Zielknoten verknüpft ist, worin der Nachbarknoten die folgenden Schritte durchführt:

Empfangen (204) des übertragenen Beacon-Signals; Berechnen (206) einer Kostenfunktion auf der Grundlage des Maßes des Leistungsvermögens im empfangenen Beacon-Signal; Anpassen (210) der Netzwerkressource im drahtlosen Multihop-Netzwerk, wenn es möglich ist, die Kostenfunktion für die Verbindung zwischen dem Quellknoten und dem Zielknoten in Bezug auf Signal-Rauschabstand, Leistung, Träger-Störabstand zu verbessern.

**14.** Verfahren nach Anspruch 13, worin das Beacon-Signal einen allgemeinen Rundsendeteil und einen verbindungsbezogenen Teil einschließt, der das Maß des Leistungsvermögens enthält, welches einschließt:

akkumulierte Kosten für die Verbindung zwischen dem Quellknoten und dem Zielknoten; oder eine maximal erlaubte Leistung für den übertragenden aktiven Knoten.

**15.** Knoten (102b, 102d-1, 102p-o, B-D, F, G) zum Optimieren des Leistungsvermögens einer Verbindung (106) zwischen einem Quellknoten (102a, A) und einem Zielknoten (102m, E) in einem Multihop-Netzwerk (100, 400),
worin der Knoten in Reichweite des Quellknotens (102a, A) und des Zielknotens (102m, E) ist;
worin das Multihop-Netzwerk (100, 400) eine Topologie hat;
worin der Knoten zum Empfangen und Übertragen (202) eines Beacon-Signals imstande ist, das ein Maß des Leistungsvermögens für eine Verbindung (106) zwischen dem Quellknoten (102a, A) und dem Zielknoten (102m, E) enthält; wobei dieses im Beacon-Signal enthaltene Maß des Leistungsvermögens mit einer Veränderung der Topologie des Multihop-Netzwerks (100, 400) in Beziehung steht;
worin die Veränderung der Topologie eines oder mehrere der folgenden einschließt:

Bewegung eines der Knoten;
Qualitätsschwankungen in einem Kanal zwischen dem Quellknoten (102a, A) und dem Zielknoten (102m, E), wobei die Qualitätsschwankungen Kanalschwund umfassen;
Veränderungen in Mustern eines Datenverkehrs im Multihop-Netzwerk (100, 400);
Veränderungen in Sendemustern des Datenverkehrs im Multihop-Netzwerk (100, 400); oder
Veränderungen in Zuteilungen einer Netzwerkressource im Multihop-Netzwerk (100, 400);
**dadurch gekennzeichnet, dass**:
der Knoten ein Protokoll zur reaktionsfähigen Leitweglenkung implementiert, bei dem die Netzwerkressource des Multihop-Netzwerks (100, 400) durch den Knoten als Antwort auf die Veränderung der Topologie im Multihop-Netzwerk (100, 400) auf eine verteilte Weise angepasst wird, um das Leistungsvermögen der Verbindung (106) zwischen dem Quellknoten (102a, A) und dem Zielknoten (102m, E) zu optimieren,

wobei auf der Grundlage des im Beacon-Signal enthaltenen Maßes des Leistungsvermögens bestimmt wird, dass diese Veränderung der Topologie aufgetreten ist;

wobei diese verteilte Weise eine Ressourcenanpassung auf einmal bereitstellt; wobei die Netzwerkressource eines oder mehrere der folgenden einschließt:

einen Leitweg (108);

den Kanal; oder

Bitübertragungsschichtparameter; und

worin die Verbindung (106) zwischen dem Quellknoten (102a, A) und dem Zielknoten (102m, E) durch den Leitweg (108) und den Kanal definiert ist.

16. Knoten (102b, 102d-l, 102p-o, B-D, F, G) nach Anspruch 15, worin der Knoten ein aktiver Knoten (102f, 102h, 102k, 1021, B, C und D) oder ein Nachbarknoten (102b, 102d, 102e, 102g, 102i, 102j, 102p, 102o, F und G) ist, wobei dieser aktive Knoten in einer Verbindung (106) zwischen dem Quellknoten und dem Zielknoten angeordnet ist und wobei dieser Nachbarknoten in Reichweite des Quellknotens, des aktiven Knotens und des Zielknotens ist.

## Revendications

1. Réseau à sauts multiples (100, 400) comportant :

un noeud source (102a, A) ;
au moins un noeud voisin (102b, 102d, 102e, 102g, 102i, 102j, 102p, 102o, F et G),
au moins un noeud actif (102f, 102h, 102k, 1021, B, C et D) ; et
un noeud de destination (102m, E) ;
dans lequel le noeud voisin (102b, 102d, 102e, 102g, 102i, 102j, 102p, 102o, F et G) se situe à portée du noeud source (102a, A), dudit au moins un noeud actif (102f, 102h, 102k, 1021, B, C et D) et du noeud de destination (102m, E) ;
dans lequel le réseau à sauts multiples (100, 400) présente une topologie ;
dans lequel le noeud actif (102f, 102h, 102k, 1021, B, C et D) est situé dans une connexion (106) entre le noeud source (102a, A) et le noeud de destination (102m, E), et est apte à recevoir, en provenance d'un autre noeud actif, et à transmettre (202), au noeud voisin, une balise contenant une mesure de performances pour la connexion (106) entre le noeud source (102a, A) et le noeud de destination (102m, E); laquelle mesure de performances contenue dans la balise est connexe à une modification de la topologie du réseau à sauts multiples (100, 400) ;
dans lequel ladite modification de topologie inclut un ou plusieurs des éléments suivants :
le mouvement de l'un des noeuds ;
des variations de qualité dans un canal entre ledit noeud source (102a, A) et ledit noeud de destination (102m, E), lesquelles variations de qualité incluent un évanouissement de canal ;
des modifications dans des motifs d'un trafic de données dans le réseau à sauts multiples (100, 400) ;
des modifications dans des motifs de transmission du trafic de données dans le réseau à sauts multiples (100, 400) ; ou
des modifications dans des affectations d'une ressource de réseau dans le réseau à sauts multiples (100, 400),
**caractérisé en ce que**
lesdits noeuds mettent en oeuvre un protocole d'acheminement réactif où la ressource de réseau du réseau à sauts multiples (100, 400) est adaptée d'une manière distribuée par le noeud voisin ou le noeud actif en réponse à la modification de la topologie dans le réseau à sauts multiples (100,400), en vue d'optimiser les performances de la connexion (106) entre ledit noeud source (102a, A) et ledit noeud de destination (102m, E),
laquelle modification de topologie est déterminée comme ayant été occasionnée sur la base de la mesure de performances contenue dans la balise ;
laquelle manière distribuée fournit une adaptation de ressources à la fois ;
dans lequel ladite ressource de réseau inclut un ou plusieurs des éléments suivants :
un chemin (108) ;
le canal ; ou
des paramètres de couche physique ; et
dans lequel la connexion (106) entre le noeud source (102a, A) et le noeud de destination (102m, E) est définie à travers le chemin (108) et le canal.

2. Réseau à sauts multiples selon la revendication 1, dans lequel le réseau à sauts multiples (100, 400) est un réseau à sauts multiples sans fil ; et dans lequel le trafic de données est transmis entre le noeud source (102a, A) et le noeud de destination (102m, E).

3. Réseau à sauts multiples selon la revendication 1, dans lequel ledit un noeud parmi le noeud voisin ou le noeud actif adapte la ressource d'une manière opportune en réponse à une modification de topologie instantanée dans le réseau à sauts multiples (100, 400).

**4.** Réseau à sauts multiples selon la revendication 1, dans lequel ledit un noeud parmi le noeud voisin ou le noeud actif adapte la ressource de la manière distribuée, dans laquelle ledit au moins un noeud voisin (F, G) est inséré dans la connexion entre ledit noeud source et ledit noeud de destination, et dans laquelle ledit au moins un noeud actif (C, D) est supprimé de la connexion entre ledit noeud source et ledit noeud de destination, laquelle manière distribuée fournit une adaptation de ressources à la fois.

**5.** Réseau à sauts multiples selon la revendication 1, dans lequel ledit un noeud parmi le noeud voisin ou le noeud actif adapte la ressource d'une manière distribuée dans laquelle au moins l'un des noeuds actifs (C, D) est supprimé de la connexion entre ledit noeud source et ledit noeud de destination, et laquelle manière distribuée fournit une adaptation de ressources à la fois.

**6.** Réseau à sauts multiples selon la revendication 2, dans lequel le noeud actif met en oeuvre l'étape ci-dessous consistant à :

transmettre (202) la balise (302) contenant la mesure de performances pour la connexion entre le noeud source et le noeud de destination ; et

dans lequel ledit au moins un noeud voisin (102b, 102d, 102e, 102g, 102i, 102j, 102p, 102o, F et G) est associé à la connexion entre le noeud source et le noeud de destination, dans lequel le noeud voisin met en oeuvre les étapes ci-dessous consistant à :

recevoir (204) la balise transmise ;

calculer (206) une fonction de coût sur la base de la mesure de performances dans la balise reçue ;

adapter (210) la ressource de réseau dans le réseau à sauts multiples sans fil s'il est possible d'améliorer la fonction de coût relativement au rapport signal sur bruit, à la puissance, au rapport porteuse sur brouillage, pour la connexion entre le noeud source et le noeud de destination.

**7.** Réseau à sauts multiples selon la revendication 6, dans lequel la balise inclut une partie de diffusion générale et une partie connexe à la connexion qui contient la mesure de performances laquelle inclut :

un coût cumulé pour la connexion entre le noeud source et le noeud de destination ; ou

une puissance maximale autorisée pour le noeud actif transmettant.

**8.** Procédé destiné à optimiser les performances d'une connexion (106) entre un noeud source (102a, A) et un noeud de destination (102m, E) dans un réseau à sauts multiples (100, 400),

le réseau à sauts multiples (100, 400) comportant le noeud source (102a, A), au moins un noeud voisin (102b, 102d, 102e, 102g, 102i, 102j, 102p, 102o, F et G), au moins un noeud actif (102f, 102h, 102k, 1021, B, C et D); et le noeud de destination (102m, E),

dans lequel le noeud voisin (102b, 102d, 102e, 102g, 102i, 102j, 102p, 102o, F et G) se situe à portée du noeud source (102a, A), dudit au moins un noeud actif (102f, 102h, 102k, 1021, B, C et D) et du noeud de destination (102m, E) ;

dans lequel le réseau à sauts multiples (100, 400) présente une topologie;

dans lequel le noeud actif (102f, 102h, 102k, 1021, B, C et D) est localisé dans la connexion (106) entre le noeud source et le noeud de destination ;

dans lequel le procédé comporte les étapes ci-dessous consistant à :

au niveau du noeud actif, recevoir, en provenance d'un autre noeud actif et transmettre (202), à un noeud voisin, une balise contenant une mesure des performances pour la connexion (106) entre le noeud source et le noeud de destination ; laquelle mesure de performances contenue dans la balise est connexe à une modification de la topologie du réseau à sauts multiples (100, 400) ; dans lequel ladite modification de topologie inclut un ou plusieurs des éléments suivants :

le mouvement de l'un des noeuds ;

des variations de qualité dans un canal entre ledit noeud source (102a, A) et ledit noeud de destination (102m, E), lesquelles variations de qualité incluent un évanouissement de canal ;

des modifications dans des motifs d'un trafic de données dans le réseau à sauts multiples (100, 400) ;

des modifications dans des motifs de transmission du trafic de données dans le réseau à sauts multiples (100, 400) ; ou

des modifications dans des affectations d'une ressource de réseau dans le réseau à sauts multiples (100,400) ;

déterminer, au niveau du noeud actif ou du noeud voisin, la modification de topologie sur la base de la mesure de performances contenue dans la balise ;

**caractérisé en ce que**

lesdits noeuds mettent en oeuvre un protocole d'acheminement réactif ; et dans lequel le procédé comporte en outre les étapes ci-dessous consistant à :

adapter, d'une manière distribuée, par le biais du noeud voisin ou du noeud actif, la ressource de réseau du réseau à sauts multiples, en réponse à la modification de la topologie dans le réseau à sauts multiples, en vue d'optimiser les performances de la connexion (106) entre ledit noeud source (102a, A) et ledit noeud de destination (102m, E);

laquelle manière distribuée fournit une adaptation de ressources à la fois ;

dans lequel ladite ressource de réseau inclut un ou plusieurs des éléments suivants :

un chemin (108) ;

le canal ; ou

des paramètres de couche physique ; et

dans lequel la connexion entre le noeud source et le noeud de destination est définie à travers le chemin (108) et le canal.

9. Procédé selon la revendication 8, dans lequel le réseau à sauts multiples est un réseau à sauts multiples sans fil ; et dans lequel le procédé comporte en outre l'étape ci-dessous consistant à :

transmettre le trafic de données entre le noeud source (102a, A) et le noeud de destination (102m, E).

10. Procédé selon la revendication 8, dans lequel ledit un noeud parmi le noeud voisin ou le noeud actif adapte la ressource d'une manière opportune en réponse à une modification de topologie instantanée dans le réseau à sauts multiples.

11. Procédé selon la revendication 8, dans lequel l'étape d'adaptation, de la manière distribuée, par le biais du noeud voisin ou du noeud actif, comporte en outre les étapes ci-dessous consistant à :

insérer ledit au moins un noeud voisin (F, G) dans la connexion entre ledit noeud source et ledit noeud de destination ; et

supprimer ledit au moins un noeud actif (C, D) de la connexion entre ledit noeud source et ledit noeud de destination ;

laquelle manière distribuée fournit une adaptation de ressources à la fois.

12. Procédé selon la revendication 8, dans lequel l'étape d'adaptation, de la manière distribuée, par le biais du noeud voisin ou du noeud actif, comporte en outre les étapes ci-dessous consistant à :

supprimer au moins l'un des noeuds actifs (C, D) de la connexion entre ledit noeud source et ledit noeud de destination, et laquelle manière distribuée fournit une adaptation de ressources à la fois.

13. Procédé selon la revendication 9, dans lequel le noeud actif met en oeuvre l'étape ci-dessous consistant à :

transmettre (202) la balise (302) contenant la mesure de performances pour la connexion entre le noeud source et le noeud de destination ; et

dans lequel ledit au moins un noeud voisin (102b, 102d, 102e, 102g, 102i, 102j, 102p, 102o, F et G) est associé à la connexion entre le noeud source et le noeud de destination, dans lequel le noeud voisin met en oeuvre les étapes ci-dessous consistant à :

recevoir (204) la balise transmise;

calculer (206) une fonction de coût sur la base de la mesure de performances dans la balise reçue;

adapter (210) la ressource de réseau dans le réseau à sauts multiples sans fil s'il est possible d'améliorer la fonction de coût relativement au rapport signal sur bruit, à la puissance, au rapport porteuse sur brouillage, pour la connexion entre le noeud source et le noeud de destination.

14. Procédé selon la revendication 13, dans lequel la balise inclut une partie de diffusion générale et une partie connexe à la connexion qui contient la mesure de performances laquelle inclut :

un coût cumulé pour la connexion entre le noeud source et le noeud de destination ; ou

une puissance maximale autorisée pour le noeud actif transmettant.

15. Noeud (102b, 102d-1, 102p-o, B-D, F, G) destiné à optimiser les performances d'une connexion (106) entre un noeud source (102a, A) et un noeud de destination (102m, E) dans un réseau à sauts multiples (100, 400) ;

dans lequel le noeud se situe à portée du noeud source (102a, A) et du noeud de destination (102m, E) ;

dans lequel le réseau à sauts multiples (100, 400) présente une topologie ;

dans lequel le noeud est apte à recevoir et à transmettre (202) une balise contenant une mesure de performances pour une connexion (106) entre le noeud source (102a, A) et le noeud de destination (102m, E) ; laquelle mesure de performances contenue dans la balise est connexe à une modification de la topologie du réseau à sauts multiples (100, 400) ;

dans lequel ladite modification de topologie inclut un ou plusieurs des éléments suivants :

le mouvement de l'un des noeuds ;

des variations de qualité dans un canal entre ledit noeud source (102a, A) et ledit noeud de destination (102m, E), lesquelles variations de qualité incluent un évanouissement de canal ;

des modifications dans des motifs d'un trafic de données dans le réseau à sauts multiples (100, 400) ;

des modifications dans des motifs de transmission du trafic de données dans le réseau à sauts multiples (100, 400) ; ou

des modifications dans des affectations d'une ressource de réseau dans le réseau à sauts multiples (100, 400),

**caractérisé en ce que**

ledit noeud met en oeuvre un protocole d'acheminement réactif où la ressource de réseau du réseau à sauts multiples (100, 400) est adaptée d'une manière distribuée par le noeud en réponse à la modification de la topologie dans le réseau à sauts multiples (100, 400), en vue d'optimiser les performances de la connexion (106) entre ledit noeud source (102a, A) et ledit noeud de destination (102m, E),

laquelle modification de topologie est déterminée comme ayant été occasionnée sur la base de la mesure de performances contenue dans la balise ;

laquelle manière distribuée fournit une adaptation de ressources à la fois ;

dans lequel ladite ressource de réseau inclut un ou plusieurs des éléments suivants :

un chemin (108) ;

le canal ; ou

des paramètres de couche physique ; et

dans lequel la connexion (106) entre le noeud source (102a, A) et le noeud de destination (102m, E) est définie à travers le chemin (108) et le canal.

16. Noeud (102b, 102d-l, 102p-o, B-D, F, G) selon la revendication 15, dans lequel le noeud est un noeud actif (102f, 102h, 102k, 1021, B, C et D) ou un noeud voisin (102b, 102d, 102e, 102g, 102i, 102j, 102p, 102o, F et G), lequel noeud actif est situé dans une connexion (106) entre le noeud source et le noeud de destination et lequel noeud voisin se situe à portée du noeud source, du noeud actif et du noeud de destination.

FIG. 1

FIG. 2

FIG. 3

FIG. 4A

Time $t_0$

Time $t_1$

FIG. 4B

Time $t_0$

Time $t_1$

FIG. 4C

Time $t_0$

Time $t_1$

FIG. 4D

Time $t_0$

Time $t_1$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. PERKINS ; E.M. ROYER ; S. R. DAS.** Ad Hoc On-demand Distance Vector Routing. *RFC 3561,* July 2003
- **D. JOHNSON ; D. MALTZ.** *Dynamic Source Routing in Ad Hoc Wireless Networks,* April 2003
- **DONGKYUN K. et al.** Power-aware Route Maintenance Protocol for Mobile Ad Hoc Networks. *IEEE Telecommunications,* 23 February 2003

- **ROUX N. et al.** Cost Adaptive Mechanism to Provide Network Diversity for MANET Reactive Routing Protocols. *IEEE MILCOM 2000,* 22 October 2000
- **R. ROZOVSKY et al.** SEEDEX: A MAC protocol for ad hoc networks. *Mobilhoc,* 2001